Europäisches Patentamt

European Patent Office

Office européen des brevets

(11) Publication number: **0 131 666**
**B1**

# EUROPEAN PATENT SPECIFICATION

(45) Date of publication of patent specification: **20.01.88**

(51) Int. Cl.⁴: **A 01 D 55/00**

(21) Application number: **83306721.8**

(22) Date of filing: **04.11.83**

(54) **Flexible line vegetation trimmers.**

(30) Priority: **18.07.83 US 515015**

(43) Date of publication of application:
**23.01.85 Bulletin 85/04**

(45) Publication of the grant of the patent:
**20.01.88 Bulletin 88/03**

(84) Designated Contracting States:
**AT BE CH DE FR GB IT LI NL SE**

(56) References cited:
**WO-A-81/03106**
**GB-A-2 115 665**
**US-A-4 316 325**

(73) Proprietor: **McCulloch Corporation**
**5401 Beethoven Street**
**Los Angeles California 90066 (US)**

(72) Inventor: **Ruzicka, Alan V.**
**1225 Idaho Avenue No. A**
**Santa Monica, California 90403 (US)**

(74) Representative: **Stanley, David William et al**
**APPLEYARD LEES & CO. 15 Clare Road Halifax**
**West Yorkshire HX1 2HY (GB)**

Courier Press, Leamington Spa, England.

## Description

This invention relates to flexible line vegetation trimmers, often known as "string trimmers".

There are known vegetation trimmers comprising at least one length of flexible line, rotatable support means for revolving the line about an axis to define a cutting path, a shield extending over at least part of the cutting path, and cutting means mounted below the shield and spaced from said axis, for trimming the line to a predetermined length upon rotation thereof. In use of such a vegetation trimmer, the line is rotated at fairly high speed, to cut vegetation. The shield helps to protect the trimmer operator from flying debris. As the line becomes worn, it is usually renewed by drawing out a fresh length of line from the rotatable support means. Upon starting up the trimmer again, the fresh length of line is automatically cut to the required length, by means of the cutting means. Also, some trimmers have an arrangement for automatically feeding the flexible line.

A problem arises with respect to the segments of flexible line which are cut by the cutting means in this way. These segments tend to travel at a relatively high speed, and there is a danger that they may strike a person in the vicinity of the operating trimmer, thus causing injury. It will be appreciated that injury could equally well be caused to animals in the vicinity of the trimmer.

U.S. Patent 4 316 325 discloses a vegetation trimmer comprising at least one length of flexible line, rotatable support means for revolving the line about an axis to define a cutting part, a shield extending over at least part of the cutting path, and cutting means mounted below the shield and spaced from the axis, for trimming the line to a predetermined length upon rotation thereof. The shield has a depending skirt which supports the cutting means, and which might serve to deflect cut line segments downwardly, after they have been cut by the cutting means. Nevertheless, such deflected cut line segments may still have an appreciable component of velocity radially of the axis, such that they may strike a person in the vicinity of the operating trimmer, and thus cause injury.

U.S. Patent 4 054 992 suggests, column 6, lines 50 to 55, that flexible cutting lines should preferably be as light weight as possible, so that when the line shears or breaks during use and pieces are thrown from the rotating head, such pieces will travel only a limited distance and will strike persons or other objects in the immediate vicinity with harmless impact, if any. However, if the flexible line is of sufficiently light weight so as to reduce the danger to persons or animals in the immediate vicinity, then it may have such reduced resistance to abrasion and the like upon operation as to be highly undesirable. Moreover, smaller diameter lines have a higher probability of piercing skin upon impact, and for that reason may be quite dangerous to those in close proximity to an operating trimmer.

In practice, a number of trimmers are currently being offered on the commercial market in the United States with relatively heavy cutting lines, capable of relatively extended use before breakage due to abrasion or the like. It will be readily appreciated that these relatively heavy cutting lines, which are especially found in the heavy duty trimmers, such as those that are petrol engine powered, subject persons or animals in the immediate vicinity to greater danger from being struck with cut line segments.

The present invention aims to at least reduce if not eliminate the danger of persons being hit by a cut line segment from an operating vegetation trimmer.

To this end, the invention provides a vegetation trimmer comprising at least one length of flexible line, rotatable support means for revolving the line about an axis to define a cutting path, a shield extending over at least part of the cutting path, and cutting means mounted below the shield and spaced from said axis, for trimming the line to a predetermined length upon rotation thereof, characterised in that the trimmer is provided with a pocket so positioned with respect to the cutting means as to catch and retain therein segments of line which are cut by the cutting means upon rotation of the line.

It will be appreciated that, since the pocket catches and retains therein the cut line segments, the risk of injury to persons in the vicinity of the trimmer when operating is reduced.

In an advantageous arrangement, the flexible line has a portion stored within the support means and an unstored portion which is revolved in said cutting path, in use.

Preferably, said cutting means comprises a blade. Said pocket is preferably disposed adjacent the cutting means.

Preferably, said pocket comprises a surface against which said segments impinge, in use, and which is inclined to said cutting path at an angle in the range 30° to 60°. Preferably, said angle is substantially 45°. The surface may be curved. Said pocket preferably has a mouth through which said segments enter, in use, and said inclined surface is defined by a wall of said pocket opposite said mouth.

The cutting means may advantageously be provided adjacent a mouth of the pocket, at a side of the mouth closest to said axis.

Said pocket may advantageously be provided on said shield. Preferably, said pocket is detachably mounted on said shield. At least one surface of the pocket may be provided by the shield.

For a better understanding of the invention, some different embodiments thereof will now be described, by way of example, with reference to the accompanying drawings, in which:

Figure 1 is a view of a string trimmer embodying the present invention;

Figure 2 is a partial overhead view of a debris shield of the string trimmer of Figure 1;

Figure 3 is a front view of the debris shield of Figure 2, with an attached cut line pocket, taken along line 3—3;

Figure 4 is a cross-sectional view of the cut line pocket and debris shield of Figure 3, taken along line 4—4;

Figure 5 is an exploded view of the debris shield and cut line pocket of Figure 2;

Figure 6 is a cross-sectional view of the debris shield and cut line pocket of Figure 4, taken along line 6—6;

Figure 7 is an overhead partial view of the string trimmer debris shield of Figure 1 with a different embodiment of cut line pocket utilized therewith;

Figure 8 is a front view of the debris shield and cut line pocket of Figure 7, taken along line 8—8;

Figure 9 is a cross-sectional view of the debris shield and cut line pocket of Figure 8, taken along line 9—9;

Figure 10 is an exploded view of the debris shield of Figures 7, 8 and 9;

Figure 11 is a bottom view of a different string trimmer debris shield having a different embodiment of cut line pocket utilized therewith;

Figure 12 is a front view of the debris shield and cut line pocket of Figure 11, taken along line 12—12; and

Figure 13 is a partial cross-sectional view of the debris shield and cut line pocket of Figure 12, taken along line 13—13.

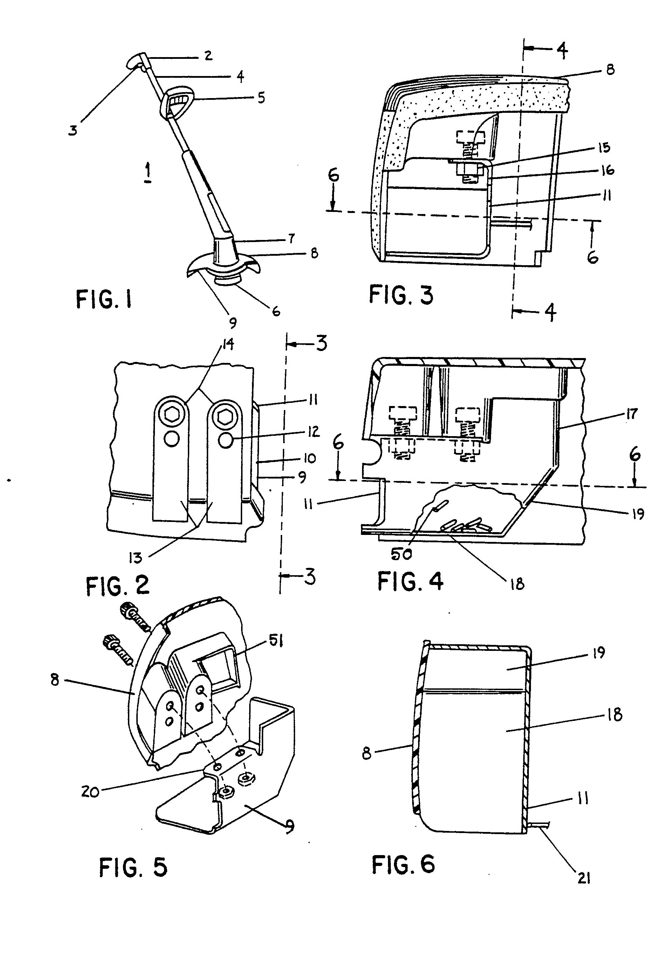

The string trimmer 1 of Figure 1 including a handle 2 with associated trigger 3 for controlling an electric motor (not shown) which is the surce of power for the string trimmer. The electric motor is in electrical connection by a cord (not shown) to a source of suitable electric power. Handle 2 is mounted upon shaft 4, which also carries a grip 5 in the middle portion thereof, and a rotatable trimmer head 6 and associated housing 7 at the end of the shaft opposite handle 2. Shield 8 overlies an arc of the cutting path of the rotation flexible line or string, and cut line pocket 9 is mounted upon shield 8. Cut line pocket 9 includes an open end 10 which has line cutter 11 mounted along the interior side thereof. Holes 12 in shield 8 are located in recesses 13 and permit the attachment of cut line pocket 9 to debris shield 8 by means of bolts 14 and nuts 15. Pocket 9 engages ribs 51 on shield 8. Cut line pocket 9 includes a sidewall 16, a rear wall 17, a bottom 18, and an angled wall 19 extending between bottom 18 and rear wall 17. The wall 19 is inclined to the cutting path at an angle in the range 30° to 60° and preferably, as shown in Figure 4, substantially 45°. Flange or lip 20 provides a convenient means for mounting cut line pocket 9.

In use, upon applying power to the trimmer 1 and pressing the trigger 3, the trimmer head 6 rotates at high speed, thus causing the flexible line or string to revolve about the axis of the trimmer head to define a cutting path. The revolving line may then cut vegetation, in known manner.

Line 21, which is preferably non-metallic, generally of a plastic material such as nylon or the like, is cut to a predetermined length upon rotation of head 6 by line cutter 11, and the cut segments 50 of line 21 are flung into cut line pocket 9, wherein they impinge upon angled wall 19 and are deflected against a portion of debris shield 8. Because of such impingements the cut line segments 50 rapidly lose their velocity and fall upon the bottom 18 of cut line pocket 9, as illustrated most clearly in Figure 4. Because of the inclination of the angled wall 19, the cut line segments 50 are so deflected that they tend not to bounce back out of the pocket 9.

Thus, the pocket 9 catches and retains safely the cut line segments 50, thereby reducing if not eliminating the risk of injury to persons in the vicinity of the operating trimmer, from the cut line segments 50.

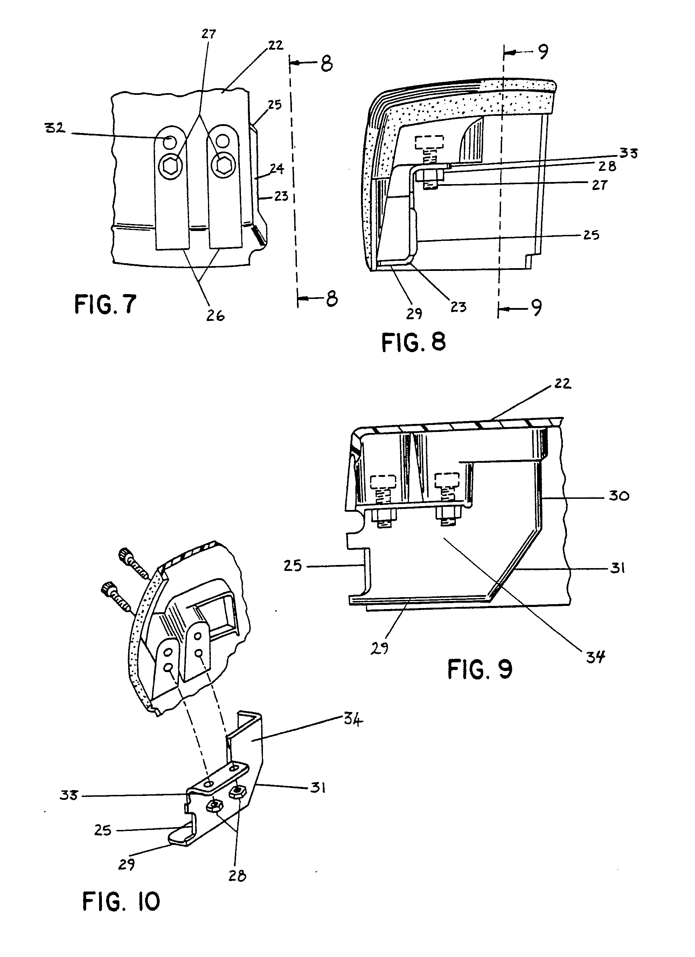

The embodiment of the present invention illustrated in Figures 7—10 includes a debris shield 22 which may be identical to shield 8 of Figures 1—6. However, a smaller cut line pocket 23 is attached to debris shield 22 and includes an open end 24 and a cutter blade 25 mounted on the interior side of open end 24. Recesses 26 in the upper surface of debris shield 22 provide a convenient location for holes 32, which receive bolts 27. Lip 33 is mounted upon debris shield 22 by bolts 27 and nuts 28. The cut line pocket 23 includes a bottom 29, a back 30, an angled wall 31 and a sidewall 34.

As will be readily appreciated from comparing Figures 3 and 8, the size of the cut line pocket can be readily varied, even using the same mounting holes in the string trimmer debris shield.

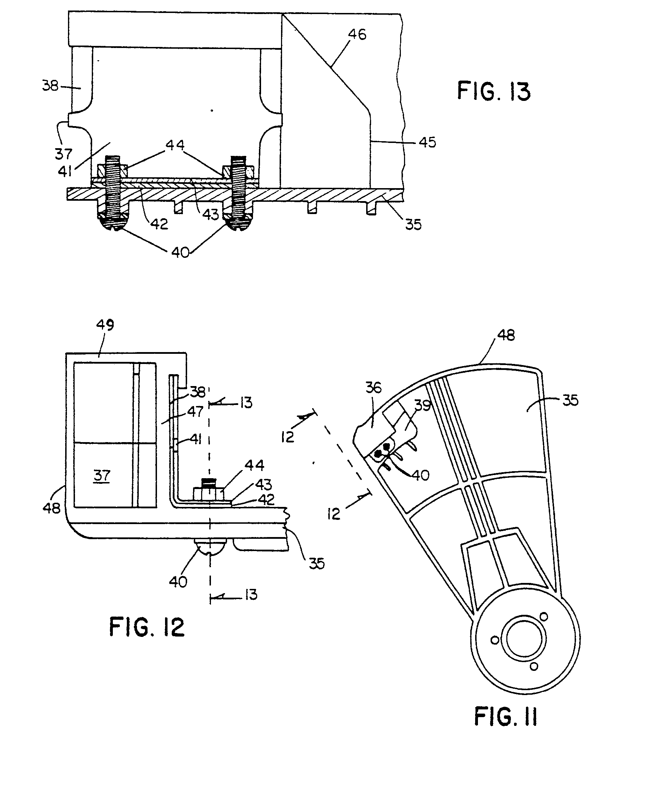

The embodiment of the present invention illustrated in Figures 11—13, designed to fit a different model of string trimmer, includes a debris shield 35 having a cut line pocket 36 formed integrally therewith. Cut line pocket 36 includes an open end 37 and a cutter blade 38 is mounted on the interior side of open end 37. Recess 39 in the upper surface of debris shield 35 provides a convenient location for holes (not shown) through which pass bolts 40. Cutter 38 and reinforcing plate 41 have lips 42 and 43, respectively, which are mounted upon debris shield 35 by bolts 40 and nuts 44. The cut line pocket 36 includes a bottom 49, a back 45, an angled wall 46 and a sidewall 47. Debris shield 35 has an outer lower flange 48 which forms one wall of pocket 36.

The embodiment of Figures 11—13 is designed for use with a twin monofilament string trimmer, having monofilament line or string of a heavy duty, larger diameter.

While the safety pocket has been illustrated in the accompanying drawings as including an angled or inclined wall, it is to be understood that the wall could be formed by gradually curving the bottom wall into the back wall, thereby producing a radiused or curved surface against which the cut line segments impinge.

While string trimmers embodying the present invention have been illustrated with reference to an electric powered string trimmer, it will be readily appreciated that other power sources, and especially internal combustion engines fueled by petrol, can be readily used.

The cut line pocket 9 could be extended around substantially the entire circumference of debris shield 8 of Figure 1 if desired, in order to provide a greater volume for receiving cut string segments and other debris. With such an extended cut line pocket it may be unnecessary to utilize an inclined wall against which the cut segments would impinge, as the cut line segments travelling in such an extended cut line pocket could impinge against the walls of debris shield 8. However, the provision of such larger cut line pockets would increase the weight of the resulting string trimmer, so that the embodiment illustrated in e.g. Figure 4, utilizing an inclined wall to prevent the cut line segments from bouncing out of the cut line pocket, is preferred.

The present invention may be used with particular advantage in string trimmers having a debris shield which extends over no more than half of the cutting path. Preferably the debris shield covers no more than a 90° arc of the string cutting path, and more preferably the arc is about 45°.

## Claims

1. A vegetation trimmer (1) comprising at least one length of flexible line (21), rotatable support means (6) for revolving the line about an axis to define a cutting path, a shield (8) extending over at least part of the cutting path, and cutting means (11) mounted below the shield (8) and spaced from said axis, for trimming the line (21) to a predetermined length upon rotation thereof, characterised in that the trimmer (1) is provided with a pocket (9) so positioned with respect to the cutting means (11) as to catch and retain therein segments of line (21) which are cut by the cutting means (11) upon rotation of the line (21).

2. A vegetation trimmer as claimed in Claim 1, wherein the flexible line has a portion stored within the support means and an unstored portion which is revolved in said cutting path, in use.

3. A vegetation trimmer as claimed in Claim 1 or 2, wherein said cutting means comprises a blade.

4. A vegetation trimmer as claimed in Claim 1, 2 or 3, wherein said pocket is disposed adjacent the cutting means.

5. A vegetation trimmer as claimed in any preceding claim, wherein said pocket comprises a surface (19) against which said segments impinge, in use, and which is inclined to said cutting path.

6. A vegetation trimmer as claimed in Claim 5, wherein said surface is inclined to said cutting path at an angle in the range 30° to 60°.

7. A vegetation trimmer as claimed in Claim 6, wherein said angle is substantially 45°.

8. A vegetation trimmer as claimed in any preceding claim, wherein said pocket has a mouth through which said segments enter, in use, and said surface is defined by a wall of said pocket opposite said mouth.

9. A vegetation trimmer as claimed in Claim 4 or in any one of Claims 5 to 8 as appendant thereto, wherein the cutting means is provided adjacent a mouth of the pocket, at a side of the mouth closest to said axis.

10. A vegetation trimmer as claimed in any preceding claim, wherein said pocket is provided on said shield.

11. A vegetation trimmer as claimed in Claim 10, wherein said pocket is detachably mounted on said shield.

12. A vegetation trimmer as claimed in Claim 11, wherein at least one surface of the pocket is provided by the shield.

## Patentansprüche

1. Fadenschneider (1), der zumindest eine Länge eines flexiblen Fadens (21), eine drehbare Stützvorrichtung (6) zum Rotieren des Fadens um eine Achse, um einen Schnittweg zu definieren, eine Abdeckung (8), die sich über zumindest einen Teil des Schnittweges erstreckt, und eine Schnittvorrichtung (11) umfaßt, die unter der Abdeckung (8) befestigt ist und von dieser Achse räumlich getrennt ist, um den Faden (21) während seiner Rotation auf eine bestimmte Länge zu schneiden, dadurch gekennzeichnet, daß der Fadenschneider (1) mit einem Fach (9) versehen ist, das in bezug auf die Schnittvorrichtung (11) so angeordnet ist, daß Segmente des Fadens (21), die während der Rotation des Fadens (21) durch die Schnittvorrichtung (11) abgeschnitten werden, darin aufgenommen und gehalten werden.

2. Fadenschneider nach Anspruch 1, worin der flexible Faden einen Abschnitt, der in der Stützvorrichtung aufbewahrt wird, und einen nicht aufbewahrten Abschnitt aufweist, der bei Verwendung im Schnittweg rotiert wird.

3. Fadenschneider nach Anspruch 1 oder 2, worin die Schnittvorrichtung ein Schneidemesser bzw. eine Klinge darstellt.

4. Fadenschneider nach Anspruch 1, 2 oder 3, worin das Fach benachbart zur Schnittvorrichtung angeordnet ist.

5. Fadenschneider nach einem der vorstehenden Ansprüche, worin das Fach eine Oberfläche (19) umfaßt, auf die bei Verwendung die Segmente aufprallen und die zum Schnittweg geneigt ist.

6. Fadenschneider nach Anspruch 5, worin die Oberfläche in einem Winkel im Bereich von 30 bis 60° zum Schnittweg geneigt ist.

7. Fadenschneider nach Anspruch 6, worin der Winkel im wesentlichen 45° beträgt.

8. Fadenschneider nach einem der vorstehenden Ansprüche, worin das Fach eine Öffnung aufweist, durch die bei Verwendung die Segmente eintreten, und die Oberfläche durch eine zur Öffnung entgegengesetzte Wand des Faches definiert wird.

9. Fadenschneider nach Anspruch 4 oder einem der darauf bezogenen Ansprüche 5 bis 8, worin die Schnittvorrichtung benachbart zur Öffnung des Faches an der Seite der Öffnung vorgesehen ist, die der Achse am nächsten liegt.

10. Fadenschneider nach einem der vorstehenden Ansprüche, worin das Fach auf der Abdeckung vorgesehen ist.

11. Fadenschneider nach Anspruch 10, worin das Fach abnehmbar auf der Abdeckung befestigt ist.

12. Fadenschneider nach Anspruch 11, worin zumindest eine Oberfläche des Faches durch die Abdeckung geliefert wird.

## Revendications

1. Dispositif de taille de végétaux (1) comprenant au moins un tronçon de fil flexible (21), des moyens support rotatifs (6) pour faire tourner le fil autour d'un axe pour définir un trajet de coupe, un écran (8) s'étendant sur au moins une partie du trajet de coupe, et des moyens de coupe (11) montés sous l'écran (8) et espacés de l'axe, pour tailler le fil (21) à une longueur prédéterminée lors de la rotation de celui-ci, caractérisé en ce que le dispositif de taille (1) est pourvu d'une case (9) disposée par rapport aux moyens de coupe de façon à recevoir et retenir dans celle-ci les segments de fil qui sont coupés par les moyens de coupe (11) lors de la rotation du fil (21).

2. Dispositif de taille de végétaux selon la revendication 1 dans lequel le fil flexible comporte une partie stockée à l'intérieur des moyens support et une partie non stockée qui est mise en rotation, lors de l'utilisation, dans le trajet de coupe.

3. Dispositif de taille de végétaux selon la revendication 1 ou la revendication 2 dans lequel les moyens de coupe comprennent une lame.

4. Dispositif de taille de végétaux selon la revendication 1, 2 ou 3 dans lequel la case est disposée de façon adjacente aux moyens de coupe.

5. Dispositif se taille de végétaux selon l'une quelconque des revendications précédentes dans lequel la case comprend une surface (19) contre laquelle les segments se heurtent, lors de l'utilisation, et qui est inclinée par rapport au trajet de coupe.

6. Dispositif de taille de végétaux selon la revendication 5 dans lequel la surface est inclinée par rapport au trajet de coupe d'un angle de 30° à 60°.

7. Dispositif de taille de végétaux selon la revendication 6 dans lequel l'angle est sensiblement de 45°.

8. Dispositif de taille de végétaux selon l'une quelconque des revendications précédentes dans lequel la case comporte une ouverture à travers laquelle les segments entrent, lors de l'utilisation, et la surface est définie par une paroi opposée à l'ouverture.

9. Dispositif de taille de végétaux selon la revendication 4 ou l'une quelconque des revendications 5 à 8 prises dans leur dépendance à celle-ci, dans lequel les moyens de coupe sont prévus adjacents à une ouverture de la case, sur un côté de l'ouverture le plus proche de l'axe.

10. Dispositif de taille de végétaux selon l'une quelconque des revendications précédentes dans lequel la case est prévue sur l'écran.

11. Dispositif de taille de végétaux selon la revendication 10 dans lequel la case est montée de façon détachable sur l'écran.

12. Dispositif de taille de végétaux selon la revendication 11 dans lequel au moins une surface de la case est réalisée par l'écran.

FIG. 1

FIG. 2

FIG. 3

FIG. 4

FIG. 5

FIG. 6

FIG. 7

FIG. 8

FIG. 9

FIG. 10

FIG. 13

38

46

37
41

44

42

43

40

45

35

49

38
47
41

37

44
43
42

40

48

35

13

12

12

48

36

35

39

40

FIG. 12

13

FIG. 11